(19) Europäisches Patentamt / European Patent Office / Office européen des brevets

(11) EP 4 366 149 A1

(12) **EUROPEAN PATENT APPLICATION**
published in accordance with Art. 153(4) EPC

(43) Date of publication:
08.05.2024 Bulletin 2024/19

(51) International Patent Classification (IPC):
**H02M 3/28** (2006.01)

(21) Application number: **21948331.0**

(52) Cooperative Patent Classification (CPC):
**H02M 3/28;** Y02B 70/10

(22) Date of filing: **30.06.2021**

(86) International application number:
**PCT/JP2021/024692**

(87) International publication number:
**WO 2023/276024 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **NAKANISHI, Takuya**
**Tokyo 100-8310 (JP)**
• **OJIKA, Satoshi**
**Tokyo 100-8310 (JP)**

(74) Representative: **Meissner Bolte Partnerschaft mbB**
**Patentanwälte Rechtsanwälte**
**Postfach 86 06 24**
**81633 München (DE)**

(54) **POWER CONVERSION DEVICE**

(57)     In a power conversion device (100) including an LLC converter (10) and a controller (20), the controller (20) performs drive control of an inverter circuit (1) in the LLC converter (10), to perform output control of the LLC converter (10). The controller (20) performs control calculation for a value Za of a manipulated variable Z so that output voltage comes close to target voltage, and acquires a combination of a phase shift amount $\theta$ and a frequency f corresponding to the value Za of the manipulated variable Z, to perform drive control of the inverter circuit (1).

FIG. 1

**Description**

TECHNICAL FIELD

The present invention relates to a power conversion device.

BACKGROUND ART

An LLC-type DC/DC converter has a circuit configuration that is small-sized and enables loss reduction, but needs to manipulate a frequency to control the output, resulting in a narrow applicable load range and deterioration in controllability.

In a conventional power conversion device using an LLC-type DC/DC converter, when the output voltage needs to be adjusted and an operation frequency has reached the upper limit frequency, a phase shift amount is adjusted to adjust the output voltage to a desired value (see, for example, Patent Document 1).

CITATION LIST

PATENT DOCUMENT

Patent Document 1: Japanese Laid-Open Patent Publication JP 2016- 63 745 A

SUMMARY OF THE INVENTION

PROBLEM TO BE SOLVED BY THE INVENTION

The conventional power conversion device uses two control modes which are control for the phase shift amount and control for the frequency, thus making it possible to adapt to a wide range of output voltage. However, in the conventional power conversion device, since the control mode needs to be switched to be used, operation becomes unstable at the boundary between the two control modes, and it is impossible to adapt to sharp load change or high-speed control.

The present invention has been made to solve the above problem, and an object of the present invention is to provide a power conversion device that can adapt to a wide output voltage range and perform control at high speed and stably, while using an LLC-type DC/DC converter.

MEANS TO SOLVE THE PROBLEM

A power conversion device according to the present invention includes: an LLC-type DC/DC converter including an isolation transformer, an inverter circuit connected to a primary-side coil of the isolation transformer, a resonance reactor and a resonance capacitor provided between the inverter circuit and the primary-side coil and connected in series to the primary-side coil, and an output circuit which is connected to a secondary-side coil of the isolation transformer and rectifies output voltage; and a controller which performs drive control of the inverter circuit, to perform output control of the DC/DC converter. The controller performs control calculation for a value Za of a manipulated variable Z so that the output voltage comes close to target voltage, and acquires a combination of a phase shift amount $\theta$ and a frequency f corresponding to the value Za of the manipulated variable Z, to perform drive control of the inverter circuit.

EFFECT OF THE INVENTION

The power conversion device according to the present invention makes it possible to adapt to a wide output voltage range and perform control at high speed and stably, while using an LLC-type DC/DC converter.

BRIEF DESCRIPTION OF THE DRAWINGS

FIG. 1 is a circuit diagram showing the configuration of a power conversion device according to Embodiment 1.
FIG. 2 is a circuit diagram showing the configuration of a power conversion device according to another example of Embodiment 1.
FIG. 3 is a circuit diagram showing the configuration of a power conversion device according to another example of Embodiment 1.

FIG. 4 shows an output voltage waveform of an inverter circuit according to Embodiment 1.

FIG. 5 is a waveform graph showing the relationship between a frequency and output voltage in the power conversion device according to Embodiment 1.

FIG. 6 is a control block diagram of the power conversion device according to Embodiment 1.

FIG. 7 illustrates a function for associating a manipulated variable with a combination of a phase shift amount and a frequency in the power conversion device according to Embodiment 1.

FIG. 8 illustrates control using the function in the power conversion device according to Embodiment 1.

FIG. 9 is a block diagram showing an example of hardware for implementing functions of a controller according to Embodiment 1.

FIG. 10 shows waveforms at respective parts for illustrating control in a power conversion device according to Embodiment 2.

FIG. 11 shows waveforms at respective parts for illustrating control in the power conversion device according to Embodiment 2.

FIG. 12 illustrates change of a function in control of the power conversion device according to Embodiment 2.

FIG. 13 illustrates another example of change of a function in control of the power conversion device according to Embodiment 2.

FIG. 14 is a circuit diagram illustrating effects of the power conversion device according to Embodiment 2.

FIG. 15 illustrates effects, using waveforms of output voltage and output current of an inverter circuit according to Embodiment 2.

FIG. 16 shows waveforms at respective parts for illustrating control in a power conversion device according to Embodiment 3.

FIG. 17 shows waveforms at respective parts for illustrating control in the power conversion device according to Embodiment 3.

FIG. 18 is a waveform graph illustrating the relationship between a frequency and output voltage in the power conversion device according to Embodiment 3.

FIG. 19 illustrates an operation range and the relationship between a frequency and output voltage under two load conditions in the power conversion device according to Embodiment 3.

DESCRIPTION OF EMBODIMENTS

Embodiment 1

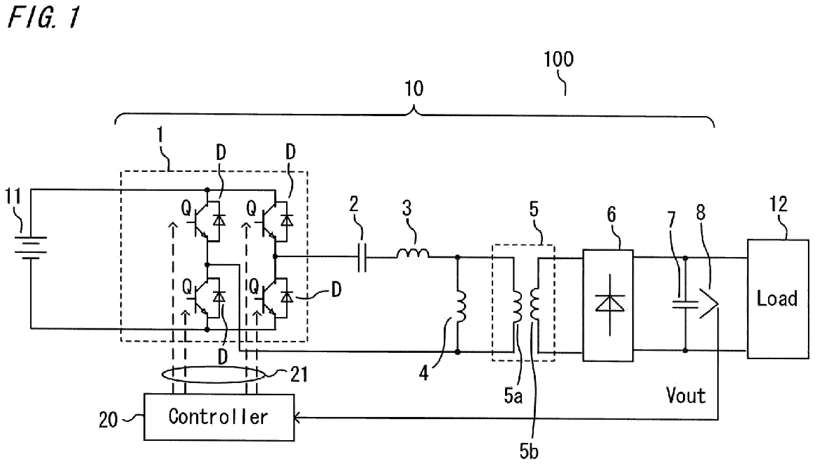

FIG. 1 is a circuit diagram showing the configuration of a power conversion device according to Embodiment 1.

As shown in FIG. 1, a power conversion device 100 includes an LLC-type DC/DC converter 10 (hereinafter, referred to as LLC converter 10) connected between a DC power supply 11 and a load 12, and a controller 20 for performing output control of the LLC converter 10.

The LLC converter 10 includes an isolation transformer 5, and an inverter circuit 1 connected to a primary-side coil 5a of the isolation transformer 5. In addition, the LLC converter 10 includes, between the inverter circuit 1 and the primary-side coil 5a, a resonance capacitor 2 and a series resonance reactor 3 connected in series to the primary-side coil 5a, and a parallel resonance reactor 4 connected in parallel to the primary-side coil 5a.

Further, the LLC converter 10 includes an output circuit 6 which is connected to a secondary-side coil 5b of the isolation transformer 5 and rectifies output voltage, and a smoothing capacitor 7 connected in parallel at a stage subsequent to the output circuit 6. In addition, a voltage sensor 8 for detecting output voltage Vout of the LLC converter 10 is provided.

The inverter circuit 1 is configured as a full-bridge circuit having a plurality of semiconductor switches Q. In this case, as the semiconductor switches Q, an insulated gate bipolar transistor (IGBT) to which a diode D is connected in antiparallel is used. However, a metal-oxide-semiconductor field-effect transistor (MOSFET) or another semiconductor switch may be used. The inverter circuit 1 is not limited to a full-bridge circuit and may be a half-bridge circuit.

The output circuit 6 is configured as a diode bridge circuit, for example. The output circuit 6 may be a half-wave rectification type or a full-wave rectification type as long as inputted AC current can be rectified.

The controller 20 receives output voltage Vout detected by the voltage sensor 8, and generates gate signals 21 for controlling the semiconductor switches Q of the inverter circuit 1 so that the output voltage Vout comes close to target voltage.

Here, the inverter circuit 1 is controlled by a combination of a switching frequency f (hereinafter, referred to as frequency f) and a phase shift amount θ. That is, the controller 20 determines a combination of the frequency f and the phase shift amount θ and generates the gate signals 21 to perform drive control of the inverter circuit 1, thus performing output control of the LLC converter 10.

In the LLC converter 10 as described above, a resonance circuit composed of the resonance capacitor 2, the series resonance reactor 3, and the parallel resonance reactor 4 is provided between the inverter circuit 1 and the primary-side coil 5a. Then, using resonance of the resonance capacitor 2, the series resonance reactor 3, and the parallel resonance reactor 4, soft switching is performed in the inverter circuit 1, whereby switching loss can be reduced.

The series resonance reactor 3 and the parallel resonance reactor 4 may be formed using a magnetizing inductance and a leakage inductance of the isolation transformer 5, as shown below.

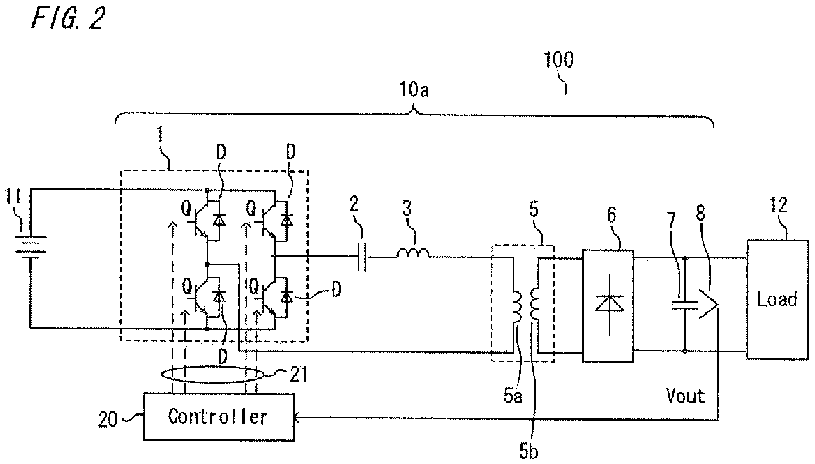

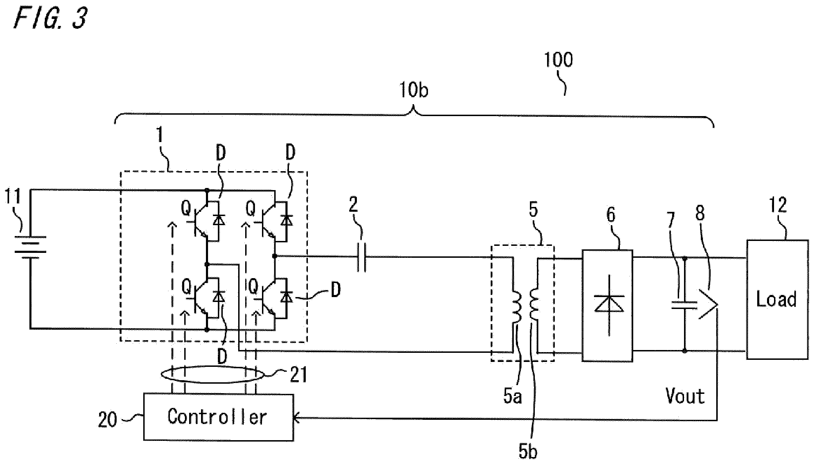

FIG. 2 and FIG. 3 are circuit diagrams showing the configurations of the power conversion device according to other examples of Embodiment 1.

In an LLC converter 10a of the power conversion device 100 shown in FIG. 2, the parallel resonance reactor and the isolation transformer 5 are formed integrally, and the magnetizing inductance of the isolation transformer 5 is used as the parallel resonance reactor.

In the case shown in FIG. 1, the inductance of the parallel resonance reactor 4 is smaller than the magnetizing inductance of the isolation transformer 5, and therefore the inductance of the parallel resonance reactor 4 influences resonance operation. On the other hand, in the case of FIG. 2 in which the isolation transformer 5 and the parallel resonance reactor are integrated, the magnetizing inductance of the isolation transformer 5 determines resonance operation.

In an LLC converter 10b of the power conversion device 100 shown in FIG. 3, the parallel resonance reactor, the series resonance reactor, and the isolation transformer 5 are integrated. The magnetizing inductance of the isolation transformer 5 is used as the parallel resonance reactor, and the leakage inductance of the isolation transformer 5 is used as the series resonance reactor.

Next, operation of the power conversion device 100 shown in FIG. 1 will be described below.

The load 12 supplied with power by the power conversion device 100 is a DC load such as a battery or a resistance load. Here, it is assumed that the load 12 is a resistance load.

The LLC converter 10 undergoes output control through switching operation of the inverter circuit 1 by the gate signals 21 from the controller 20. The LLC converter 10 converts DC power inputted from the DC power supply 11, to desired DC power (voltage, current), and supplies the converted DC power to the load 12.

In the LLC converter 10, first, the inverter circuit 1 converts DC power supplied from the DC power supply 11, to rectangular-wave AC power, through switching operations of the semiconductor switches Q. Each semiconductor switch Q of the inverter circuit 1 is provided with a gate driving circuit (not shown), and the gate driving circuit receives the gate signal 21 from the controller 20 and drives a gate terminal of the semiconductor switch Q.

In this case, the generated gate signal 21 has two degrees of freedom which are the frequency f and the phase shift amount $\theta$. By changing the frequency f and the phase shift amount $\theta$ as appropriate, power to be supplied to the load 12 is controlled.

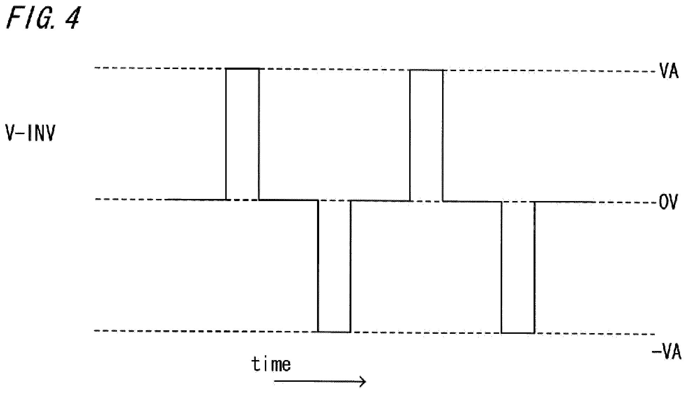

FIG. 4 shows an output voltage waveform of the inverter circuit 1.

As shown in FIG. 4, the inverter circuit 1 outputs output voltage V-INV which is rectangular-wave voltage, on the basis of voltage VA of the DC power supply 11. In this case, the output voltage V-INV has three levels of +VA, 0, and -VA.

The output voltage V-INV outputted from the inverter circuit 1 is inputted to the isolation transformer 5 through the series resonance reactor 3 and the parallel resonance reactor 4, and the resonance capacitor 2. In this case, resonance is caused by the series resonance reactor 3, the parallel resonance reactor 4, and the resonance capacitor 2, so that voltage not less than the output voltage V-INV of the inverter circuit 1 is inputted to the primary-side coil 5a of the isolation transformer 5.

AC power inputted to the primary-side coil 5a of the isolation transformer 5 is supplied to the secondary-side coil 5b of the isolation transformer 5 and inputted to the output circuit 6. Then, the inputted power is rectified by the output circuit 6, to be converted to DC power. The DC power is smoothed by the smoothing capacitor 7 and then supplied to the load 12.

Normally, in the LLC converter 10 which is an LLC-type DC/DC converter, a resonance system composed of the resonance capacitor 2, the series resonance reactor 3, and the parallel resonance reactor 4 is configured such that the output voltage Vout increases as the frequency f decreases, and the output voltage Vout decreases as the frequency f increases.

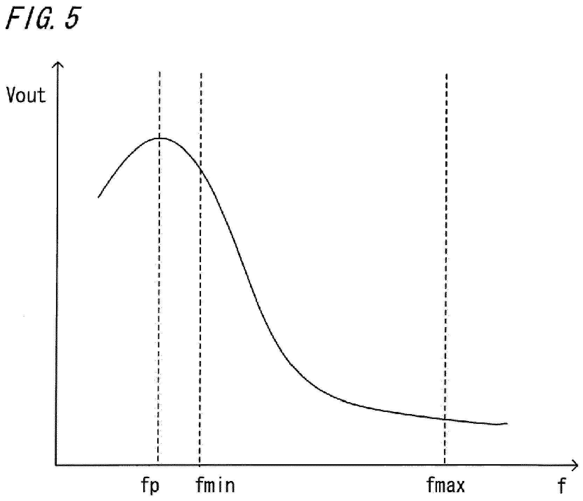

FIG. 5 is a waveform graph showing the relationship between the frequency and the output voltage in the power conversion device 100. In FIG. 5, it is assumed that the resistance value of the load 12 is constant and the input voltage is also constant.

As shown in FIG. 5, a lower limit value fmin for the frequency f is set to be greater than a frequency fp at which the output voltage Vout is maximized.

Increase/decrease of the phase shift amount $\theta$ corresponds to substantial increase/decrease of the effective value of the output voltage V-INV of the inverter circuit 1, that is, the output voltage V-INV decreases as the phase shift amount $\theta$ increases, and the output voltage V-INV increases as the phase shift amount $\theta$ decreases.

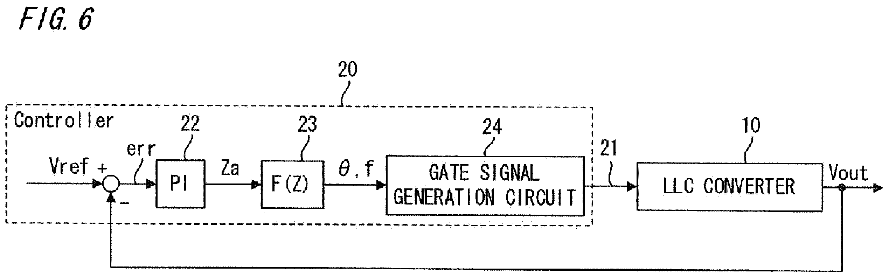

FIG. 6 is a control block diagram of the power conversion device 100.

As shown in FIG. 6, the controller 20 receives output voltage Vout of the LLC converter 10 and calculates a deviation err between target voltage Vref and the output voltage Vout, and the deviation err is inputted to the control unit 22. The control unit 22 performs control calculation through PI (Proportional-Integral) control so that the inputted deviation err comes close to zero, and outputs a value Za of a manipulated variable Z.

The controller 20 includes a function 23, i.e., F(Z) = (θ, f), which uniquely associates the manipulated variable Z with a combination (θ, f) of the phase shift amount θ and the frequency f. Then, on the basis of the included function 23 (F(Z)), a combination (θ, f) of the phase shift amount θ and the frequency f corresponding to the calculated value Za of the manipulated variable Z is acquired.

The acquired combination (θ, f) is inputted to a gate signal generation circuit 24. The gate signal generation circuit 24 generates the gate signals 21 for the semiconductor switches Q of the inverter circuit 1 on the basis of the inputted phase shift amount θ and frequency f, and the gate signals 21 are outputted from the controller 20.

Then, the inverter circuit 1 operates with the phase shift amount θ and the frequency f provided by the gate signals 21 and thus the output voltage Vout of the LLC converter 10 is controlled.

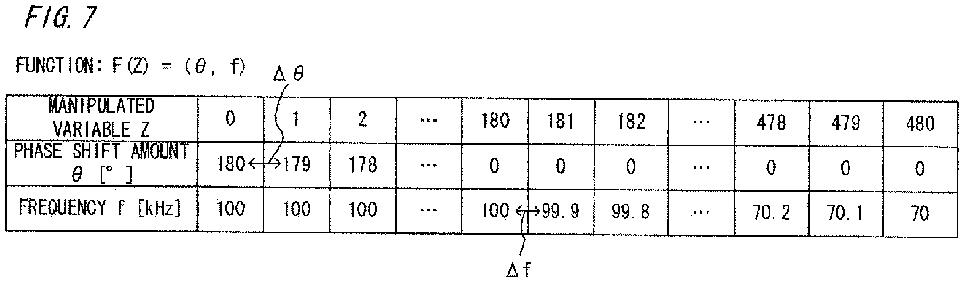

FIG. 7 illustrates the function F(Z) = (θ, f) for associating the manipulated variable Z with the combination (θ, f) of the phase shift amount θ and the frequency f.

The entire range of the manipulated variable Z is constituted of consecutive integers from 0 to a maximum value Zmax. In this case, regarding the phase shift amount θ, an upper limit value θmax is 180°, a lower limit value θmin is 0°, and a set change width Δθ which is change of the phase shift amount θ per unit change amount 1 of the manipulated variable Z is 1°. In addition, regarding the frequency f, an upper limit value fmax is 100 kHz, a lower limit value fmin is 70 kHz, and a set change width Δf which is change of the frequency f per unit change amount 1 of the manipulated variable Z is 0.1 kHz.

The set change width Δθ is not limited to 1°, and any possible step size for the phase shift amount θ may be used. Also, the set change width Δf is not limited to 0.1 kHz, and any possible step size for the frequency f may be used.

In this case, the change amount of the manipulated variable Z corresponding to change of the phase shift amount θ from the upper limit value θmax (180°) to the lower limit value θmin (0°) is 180, and the change amount of the manipulated variable Z corresponding to change of the frequency f from the upper limit value fmax (100 kHz) to the lower limit value fmin (70 kHz) is 300.

Therefore, the maximum value Zmax of the manipulated variable Z is 480, and the manipulated variable range is divided into a low manipulated variable range (0 to 180), and a high manipulated variable range (180 to 480) subsequent thereto. In this case, a border point Zx (180) between the two ranges is a point (integer) included in both of the low manipulated variable range (0 to 180) and the high manipulated variable range (180 to 480).

That is, the border point Zx (180) is the maximum value of the manipulated variable Z in the low manipulated variable range (0 to 180) and the minimum value thereof in the high manipulated variable range (180 to 480).

The function F(Z) is set such that, in the low manipulated variable range (0 to 180) of the manipulated variable Z, the frequency f is kept at the upper limit value fmax and the phase shift amount θ decreases by the set change width Δθ from the upper limit value θmax to the lower limit value θmin per increase of the manipulated variable Z by 1.

In the entirety of the low manipulated variable range (0 to 180), the phase shift amount θ continuously decreases by an equal set change width Δθ (1°) per increase of the manipulated variable Z by 1.

In addition, the function F(Z) is set such that, in the high manipulated variable range (180 to 480) of the manipulated variable Z, the phase shift amount θ is kept at the lower limit value θmin and the frequency f decreases by the set change width Δf from the upper limit value fmax to the lower limit value fmin per increase of the manipulated variable Z by 1. In the entirety of the high manipulated variable range (180 to 480), the frequency f continuously decreases by an equal set change width Δf (0.1 kHz) per increase of the manipulated variable Z by 1.

When the manipulated variable Z is at the border point Zx (180), the phase shift amount θ is the lower limit value θmin and the frequency f is the upper limit value fmax.

In the above description, the case where the function F(Z) uses the frequency f has been shown.

However, a switching cycle (hereinafter, referred to as cycle) may be used instead of the frequency f. For example, in a microcomputer or a field-programmable gate array (FPGA) used for generating the gate signals 21, a possible step size of the frequency f per minimum pulse resolution might not be constant, but a step size of the cycle (time resolution) is constant.

Also, regarding the phase shift amount θ, time corresponding to a degree may be used instead of a degree.

An example of calculation of the manipulated variable Z using PI control will be described below.

The control unit 22 calculates the manipulated variable Z so that the deviation err between the target voltage Vref and the output voltage Vout becomes zero, in every control cycle. Where N denotes the present cycle and N - 1 denotes the previous cycle, the manipulated variable Z[N] can be calculated by the following expression.

$$Z[N] = Z[N-1] + kp \cdot (err[N] - err[N-1]) + ki \cdot (err[N] + err[N-1])$$

kp, ki: gain

There are numerous variations of control calculations and the above control calculation is merely an example. In the above description, PI control has been shown as an example. However, control calculation may be performed by P (Proportional-Integral) control, PD (Proportional-Differential) control, PID (Proportional-Integral-Differential) control, or the like.

For example, in a case where the deviation err between the target voltage Vref and the output voltage Vout is small or the control gain is small, operation when the calculated value Za of the manipulated variable Z sequentially increases by 1 per control cycle will be described below.

In a case of using the function F(Z) shown in FIG. 7, it is assumed that the value Za of the manipulated variable Z sequentially increases, the frequency f is kept at the upper limit value fmax (= 100), and the phase shift amount θ decreases on a 1-by-1 basis. The phase shift amount θ changes to 170, 169, and then 168, for example, and along with this, the output voltage Vout gradually increases.

Then, even when the phase shift amount θ becomes the lower limit value θmin (= 0) at the above border point Zx (Za = 180), if the output voltage Vout has not reached the target voltage Vref, in calculation at the next control cycle, the value Za of the manipulated variable Z becomes 181 and the frequency f decreases from the upper limit value fmax (= 100) to 99.9. At this time, the phase shift amount θ is kept at the lower limit value θmin (= 0).

The phase shift amount θ changes until the manipulated variable Z reaches the border point Zx (Za = 180), and the frequency f changes thereafter. On the basis of the provided function F(Z) set in advance, the phase shift amount θ and the frequency f are determined in the same manner in any case.

That is, a combination (θ, f) of the phase shift amount θ and the frequency f uniquely corresponding to the value Za of the manipulated variable Z is acquired and determined. Thus, the phase shift amount θ and the frequency f can be easily and assuredly determined and control switching for a control mode or the like is not needed, whereby the LLC converter 10 can be controlled at high speed and stably.

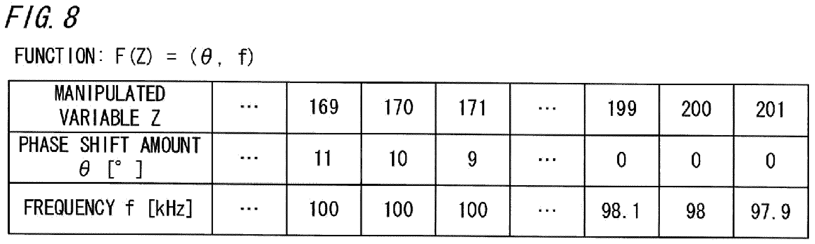

Next, in a case where the deviation err between the target voltage Vref and the output voltage Vout is great or the control gain is great, operation when a width by which the calculated value Za of the manipulated variable Z increases per control cycle is great will be described below, with reference to FIG. 8. FIG. 8 illustrates control using the function F(Z) and shows the details of a part of FIG. 7.

In a case of using the function F(Z) shown in FIG. 7 and FIG. 8, for example, when the value Za of the manipulated variable Z changes from 170 to 200, a combination (θ, f) of the phase shift amount θ and the frequency f changes from (10°, 100 kHz) to (0°, 98 kHz), as shown in FIG. 8.

As described above, in a case where the manipulated variable Z changes by a great width instead of continuously changing on a 1-by-1 basis in calculation at every control cycle, both of the phase shift amount θ and the frequency f may change in one control cycle. Also in this case, on the basis of the included function F(Z) set in advance, a combination (θ, f) of the phase shift amount θ and the frequency f uniquely corresponding to the value Za of the manipulated variable Z is acquired, and thus the phase shift amount θ and the frequency f can be easily and assuredly determined. In addition, since a control mode need not be switched, the LLC converter 10 can be controlled at high speed and stably.

As described above, in the present embodiment, irrespective of the magnitude of the deviation err between the target voltage Vref and the output voltage Vout or the magnitude of the control gain, a combination (θ, f) of the phase shift amount θ and the frequency f corresponding to the calculated value Za of the manipulated variable Z is acquired on the basis of the included function F(Z) set in advance.

Thus, it is not necessary to switch control as in conventional art and the gate signals 21 can be generated in the same manner over a wide output voltage range, whereby control of the LLC converter 10 can be performed at high speed and stably.

In a case of switching between two control modes which are frequency control and phase shift amount control as in conventional art, after a limit in one control is reached, the control mode is switched to the other control. Further, it is necessary that, at the time of switching the control, switching determination is performed and a certain hysteresis width is provided to prevent the control from becoming unstable. In such a conventional control operation, it is difficult to improve a control response speed.

In the present embodiment, the controller 20 performs control calculation for the value Za of the manipulated variable Z so that the output voltage Vout comes close to the target voltage Vref, and acquires a combination (θ, f) of the phase shift amount θ and the frequency f corresponding to the value Za of the manipulated variable Z, to perform drive control of the inverter circuit 1, thus controlling the LLC converter 10. Therefore, it is not necessary to switch the control mode and it is possible to achieve high-speed and stable control adaptable to a wide output voltage range.

The controller 20 includes the function F(Z) for uniquely associating each value of the manipulated variable Z with a combination of the phase shift amount θ and the frequency f, and acquires a combination (θ, f) of the phase shift amount θ and the frequency f corresponding to the calculated value Za of the manipulated variable Z, on the basis of the function F(Z). Thus, a combination (θ, f) of the phase shift amount θ and the frequency f can be easily and assuredly determined, and high-speed and stable control adaptable to a wide output voltage range can be easily achieved.

Functions of the controller 20 are implemented by a processing circuit, for example.

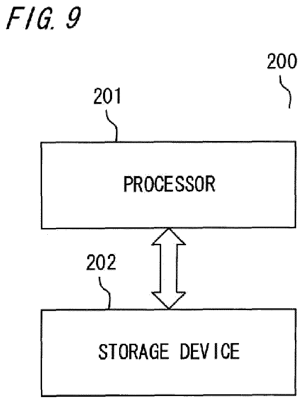

FIG. 9 is a block diagram showing an example of hardware for implementing functions of the controller 20.

As shown in FIG. 9, a processing circuit 200 forming the controller 20 is composed of a processor 201 and a storage device 202. The storage device 202 is provided with a volatile storage device such as a random access memory and a nonvolatile auxiliary storage device such as a flash memory (which are not shown). Instead of the flash memory, an auxiliary storage device of a hard disk may be provided.

The processor 201 executes a program inputted from the storage device 202. In this case, the program is inputted from the auxiliary storage device to the processor 201 via the volatile storage device. The processor 201 may output data such as a calculation result to the volatile storage device of the storage device 202, or may store such data into the auxiliary storage device via the volatile storage device.

As the processing circuit 200, a microcomputer or an FPGA described above is used, for example.

Embodiment 2

In the above Embodiment 1, the function F(Z) is set such that, in the entirety of the low manipulated variable range (0 to 180), the phase shift amount θ continuously decreases by an equal set change width Δθ (1°) per increase of the manipulated variable Z by 1. In addition, in the entirety of the high manipulated variable range (180 to 480), the frequency f continuously decreases by an equal set change width Δf (0.1 kHz) per increase of the manipulated variable Z by 1.

In the present Embodiment 2, a first specific region where the phase shift amount θ does not continuously decrease by an equal set change width Δθ (1°), i.e., decreases discontinuously, is provided in the low manipulated variable range (0 to 180). Also in Embodiment 2, the power conversion device 100 having the same circuit configuration as in the above Embodiment 1 is applied.

First, as in the above Embodiment 1, the LLC converter 10 is operated using the function F(Z) shown in FIG. 7, and thereafter, the function F(Z) is changed in accordance with the operation state of the LLC converter 10 and the changed function Fa(Z) is set.

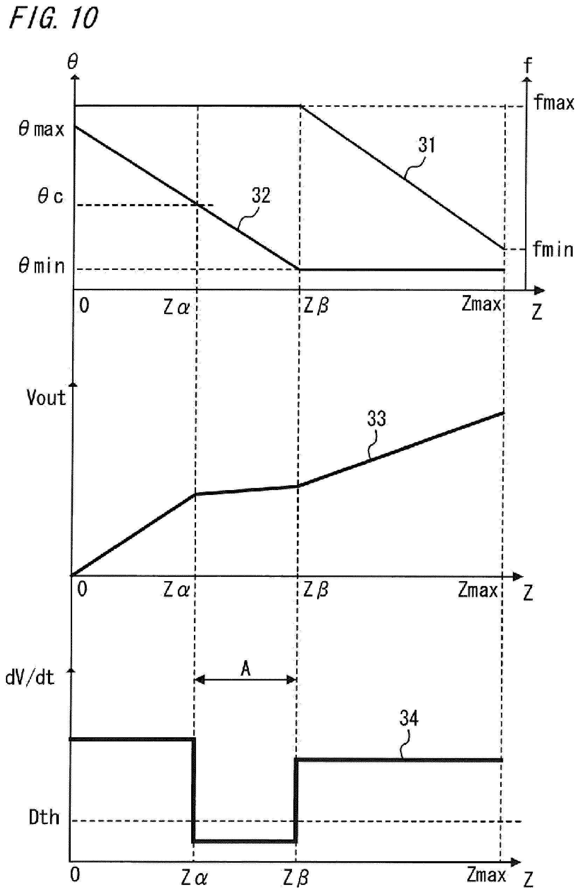

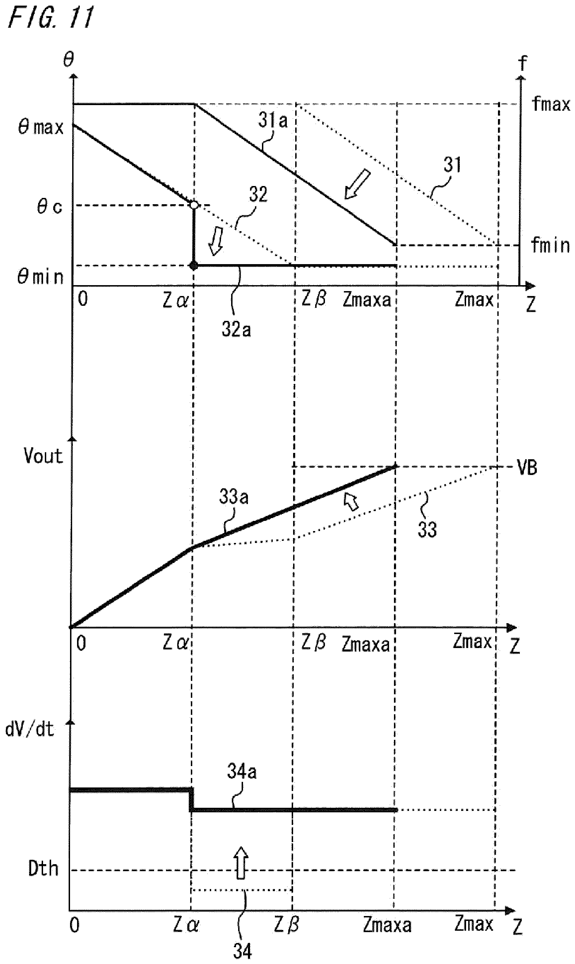

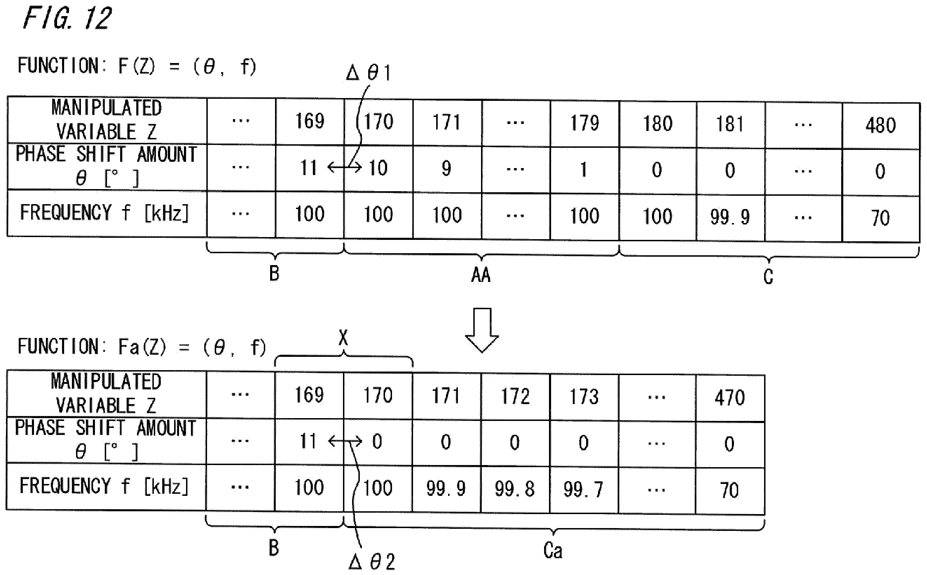

FIG. 10 to FIG. 12 illustrate control according to Embodiment 2. Specifically, FIG. 10 shows waveforms at respective parts in a case of using the function F(Z) that has not been changed yet, FIG. 11 shows waveforms at respective parts in a case of using the changed function Fa(Z), and FIG. 12 shows change from the function F(Z) to the function Fa(Z).

The controller 20 has such a function of storing, for example, a change amount of the output voltage Vout per control cycle, as a differential value of the output voltage Vout measured by the voltage sensor 8.

To start supplying the gate signals 21 to the inverter circuit 1, the controller 20 generates the gate signals 21 in such a mode of sequentially increasing the manipulated variable Z, using the function F(Z) shown in the above Embodiment 1, thereby operating the LLC converter 10. At this time, a differential value dV/dt of the output voltage Vout is stored.

When the manipulated variable Z is sequentially increased using the function F(Z) as described above, the LLC converter 10 operates as shown in FIG. 10.

In FIG. 10, a waveform 31 represents change of the frequency f, and a waveform 32 represents change of the phase shift amount θ. A waveform 33 represents change of the output voltage Vout, and a waveform 34 represents change of the differential value dV/dt of the output voltage Vout as an output differential value.

Since the manipulated variable Z is an integer which is a discrete value, the waveforms 31 to 34 of the frequency f, the phase shift amount θ, the output voltage Vout, and the differential value dV/dt do not actually exhibit continuous changes, but are shown as lines connecting values, for convenience sake. In this case, the maximum value Zmax of the manipulated variable Z is 480, and in the graph, Zα is 170 and Zβ is 180.

As shown in FIG. 10, in the low manipulated variable range (0 to 180) of the manipulated variable Z, the frequency f is kept at the upper limit value fmax and the phase shift amount θ continuously decreases by the set change width Δθ (1°) from the upper limit value θmax to the lower limit value θmin per increase of the manipulated variable Z by 1. At this time, the set change width Δθ (1°) is defined as a unit change width Δθ1.

In the high manipulated variable range (180 to 480) of the manipulated variable Z, the phase shift amount θ is kept at the lower limit value θmin and the frequency f continuously decreases by the set change width Δf from the upper limit value fmax to the lower limit value fmin per increase of the manipulated variable Z by 1. At this time, the set change width Δf (0.1 kHz) is defined as a unit change width Δf1.

As shown by the waveforms 33, 34, there is a region where the differential value dV/dt of the output voltage Vout is small, i.e., the output voltage Vout hardly changes relative to change of the manipulated variable Z.

The controller 20 detects a region A of the manipulated variables (Zα to Zβ) where the differential value dV/dt is not greater than a predetermined value Dth. Then, the function F(Z) is changed so as to exclude combinations (θ, f) of the phase shift amount θ and the frequency f corresponding to the region A, and the changed function Fa(Z) is set.

Through change from the function F(Z) to the function Fa(Z), as shown in FIG. 11, the frequency f, the phase shift amount θ, the output voltage Vout, and the differential value dV/dt thereof shift from characteristics represented by the waveforms 31, 32, 33, 34 to characteristics represented by waveforms 31a, 32a, 33a, 34a.

At this time, as shown in FIG. 10 and FIG. 11, the waveforms 31a, 32a, 33a, 34a are formed such that a region of manipulated variables (Zβ to Zmax) subsequent to the greater manipulated variable Z side of the detected region A of manipulated variables (Zα to Zβ), is shifted to the region A side.

In this case, a combination (θ, f) of the phase shift amount θ and the frequency f corresponding to the value Zβ of the manipulated variable Z in the function F(Z) becomes a combination (θ, f) of the phase shift amount θ and the frequency f corresponding to the value Zα of the manipulated variable Z in the new function Fa(Z).

Thus, when the function F(Z) is changed to the function Fa(Z) so as to exclude the region A, the combination (θ, f) of the phase shift amount θ and the frequency f at the upper limit value Zβ of the manipulated variable Z in the region A is left.

Since the manipulated variable Z is a discrete integer, in this case, the manipulated variable region as a removal target corresponding to the region A is a region not less than Zα but less than Zβ, and is actually a region of integers Zα to (Zβ - 1). A phase shift amount θc at the lower limit value Zα of the manipulated variable Z in the region A is removed.

As shown in FIG. 12, when the function F(Z) is changed to the function Fa(Z) so as to exclude the region A, combinations (θ, f) of the phase shift amount θ and the frequency f in a region AA of manipulated variables (170 to 179) in the function F(Z) are removed. As a result, the maximum value Zmax of the manipulated variable Z decreases by 10 which is the number of the removed manipulated variables Z, to become a maximum value Zmaxa (= 470).

In addition, combinations (θ, f) of the phase shift amount θ and the frequency f in a region C of manipulated variables (180 to 480) subsequent to the region A in the function F(Z) become combinations (θ, f) of the phase shift amount θ and the frequency f in a region Ca of manipulated variables (170 to 470) in the changed function Fa(Z).

At this time, combinations (θ, f) of the phase shift amount θ and the frequency f in a region B of manipulated variables (0 to 169) in the function F(Z) are kept as they are, in the changed function Fa(Z).

In the function Fa(Z) changed as described above, in the low manipulated variable range (0 to 170) of the manipulated variable Z, the frequency f is kept at the upper limit value fmax and the phase shift amount θ decreases by the set change width Δθ from the upper limit value θmax to the lower limit value θmin per increase of the manipulated variable Z by 1.

In this case, in a manipulated variable region (169 to 170) which is a first specific region X corresponding to a change amount 1 of the manipulated variable Z, the phase shift amount θ changes by a change width Δθ2 which is plural times of the unit change width Δθ1 (1°), here, 11 times
(= 11°). In a region (0 to 169) other than the low manipulated variable range (0 to 170), the phase shift amount θ continuously decreases by the unit change width Δθ1 per increase of the manipulated variable Z by 1.

As described above, in the present embodiment, the region A where the differential value dV/dt of the output voltage Vout is not greater than a predetermined value Dth is detected, the function F(Z) is changed so as to exclude that region, and the changed function is used. In this way, a low-controllability range in which the output hardly changes relative to change of the manipulated variable Z can be removed, whereby control performance and response are improved. Thus, as in the above Embodiment 1, it is possible to achieve higher-speed and more stable control adaptable to a wide output voltage range.

In the above embodiment, the LLC converter 10 is operated using the function F(Z) set in advance, the function F(Z) is changed in accordance with the operation state, and the changed function Fa(Z) is set. Here, the function F(Z) can be changed as needed, and it is possible to dynamically set the first specific region X where the change width is not the unit change width Δθ1 (1°), by monitoring the differential value dV/dt of the output voltage Vout.

In the above embodiment, in the low manipulated variable range (0 to 180), the region A where the differential value dV/dt of the output voltage Vout is not greater than the set value Dth is detected, and the function F(Z) is changed so as to exclude that region. However, also when the region A is detected in the high manipulated variable range (180 to 480), the function F(Z) can be changed in the same manner. In this case, the changed function is a function Fb(Z).

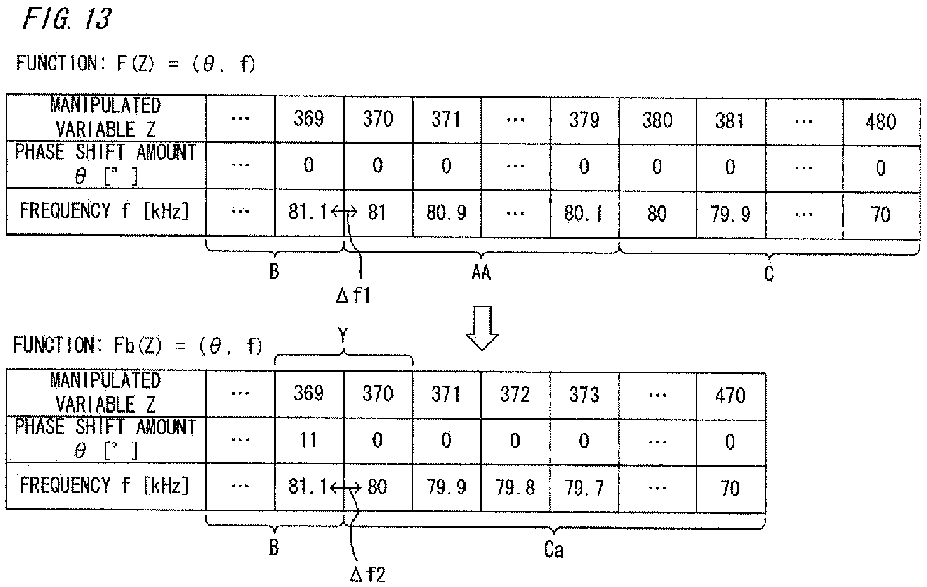

FIG. 13 shows change from the function F(Z) to the function Fb(Z).

In this case, for example, it is assumed that a state in which the differential value dV/dt of the output voltage Vout is not greater than the set value Dth is detected in the region A of manipulated variables (370 to 380). This region A is merely an example, and a region near the border between the low manipulated variable range (0 to 180) and the high manipulated variable range (180 to 480), e.g., a region (180 to 190), may be employed.

Then, the function F(Z) is changed so as to exclude the region A, i.e., so as to shift a region of manipulated variables (380 to 480) subsequent to the greater manipulated variable Z side of the region A to the region A side. In this case, the manipulated variable region as a removal target corresponding to the region A is actually a region of integers 370 to 379.

As shown in FIG. 13, when the function F(Z) is changed to the function Fb(Z), combinations (θ, f) of the phase shift amount θ and the frequency f in a region AA of manipulated variables (370 to 379) in the function F(Z) are removed.

As a result, the maximum value Zmax of the manipulated variable Z decreases by 10 which is the number of the removed manipulated variables Z, to become a maximum value Zmaxa (= 470).

In addition, combinations ($\theta$, f) of the phase shift amount $\theta$ and the frequency f in a region C of manipulated variables (380 to 480) subsequent to the region A (370 to 380) in the function F(Z) become combinations ($\theta$, f) of the phase shift amount $\theta$ and the frequency f in a region Ca of manipulated variables (370 to 470) in the changed function Fb(Z). At this time, combinations ($\theta$, f) of the phase shift amount $\theta$ and the frequency f in a region B of manipulated variables (0 to 369) in the function F(Z) are kept as they are, in the changed function Fb(Z).

In the function Fb(Z) changed as described above, in the high manipulated variable range (180 to 470) of the manipulated variable Z, the frequency f is kept at the upper limit value fmax and the phase shift amount $\theta$ decreases by the set change width $\Delta\theta$ from the upper limit value $\theta$max to the lower limit value $\theta$min per increase of the manipulated variable Z by 1.

In this case, in a manipulated variable region (369 to 370) which is a second specific region Y corresponding to a change amount 1 of the manipulated variable Z, the frequency f changes by a change width $\Delta$f2 which is plural times of the unit change width $\Delta$f1 (0.1 kHz), here, 11 times (= 11.1 kHz). In a region other than the second specific region Y in a high manipulated variable range (180 to 470), the frequency f continuously decreases by the unit change width $\Delta$f1 per increase of the manipulated variable Z by 1.

Also in this case, the region A where the differential value dV/dt of the output voltage Vout is not greater than a predetermined value Dth is detected, the function F(Z) is changed to the function Fb(Z) so as to exclude that region, and the changed function Fb(Z) is used. In this way, a low-controllability range in which the output hardly changes relative to change of the manipulated variable Z can be removed, whereby control performance and response are improved.

Thus, as in the above Embodiment 1, it is possible to achieve higher-speed and more stable control adaptable to a wide output voltage range.

In addition, since the range of the control frequency (frequency f) can be changed, the design range for the control frequency can be expanded, so that robustness is improved.

In the above embodiment, the method of changing the function F(Z) to the function Fa(Z) or the function Fb(Z) has been shown. However, the function F(Z) may be set in advance so that the differential value dV/dt of the output voltage Vout exceeds the set value Dth. In this case, the set function F(Z) includes one or both of the first specific region X and the second specific region Y, in advance.

Also in this case, it is possible to set the function F(Z) using the same method as that for the function F(Z) described above, by performing simulation or the like in the controller 20 on the basis of past experience values, for example.

Instead of the differential value dV/dt of the output voltage Vout, the differential value of output power or output current may be used as the output differential value.

Hereinafter, unique effects obtained by the circuit configuration according to Embodiment 2 will be described.

Since the LLC converter 10 operates using resonance, there is an operation condition in which the power factor of the output of the inverter circuit 1 is low, depending on the frequency. This operation condition corresponds to that a period in which the inverter circuit 1 outputs reactive power is prolonged.

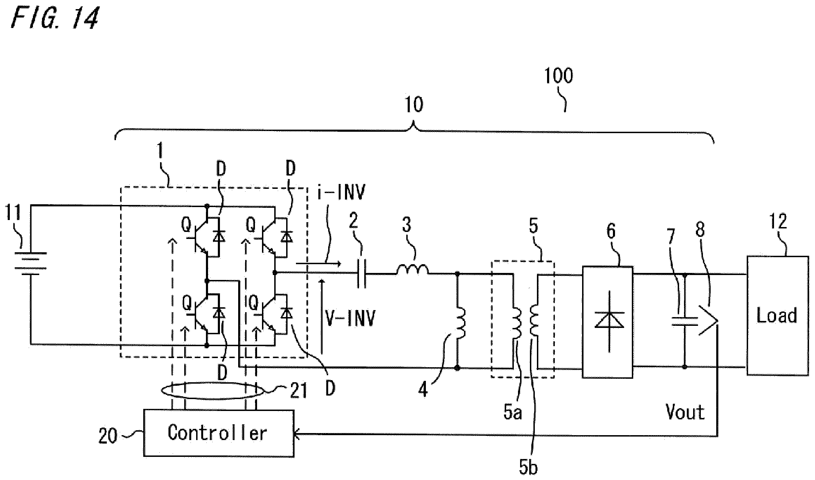

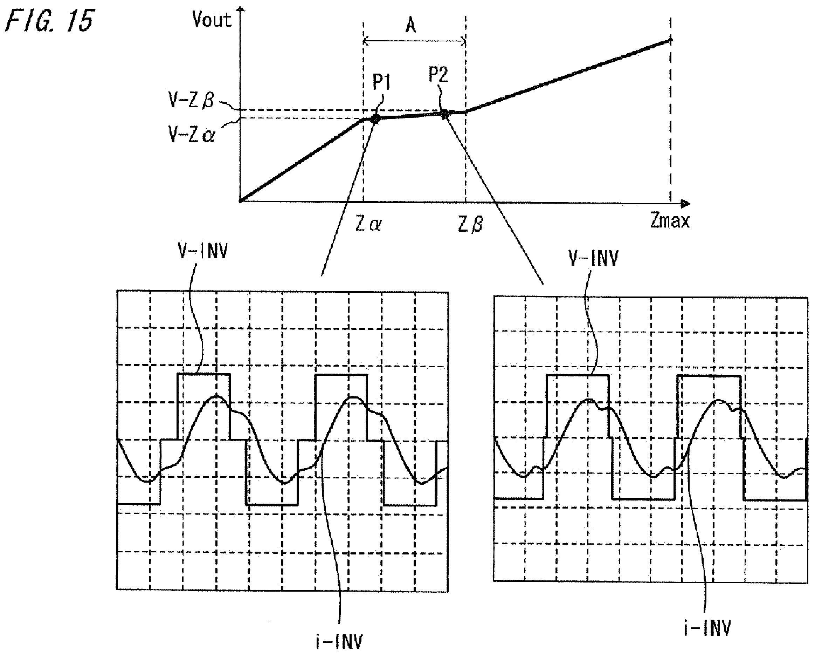

FIG. 14 is a circuit diagram illustrating effects of the power conversion device according to Embodiment 2. FIG. 15 illustrates effects, using waveforms of output voltage and output current of the inverter circuit. The circuit configuration of the power conversion device 100 is the same as that shown in FIG. 1, and in FIG. 14, output voltage V-INV and output current i-INV of the inverter circuit 1 are shown.

In FIG. 15, the output voltage V-INV and the output current i-INV at two points P1 and P2 in the region A of manipulated variables (Z$\alpha$ to Z$\beta$) where the differential value dV/dt is not greater than the set value Dth and the output voltage Vout hardly changes, are shown. For example, when the manipulated variable Z is Z$\alpha$, the ratio of output voltage V-Z$\alpha$ to the input (input-output voltage ratio) is 0.84, and when the manipulated variable Z is Z$\beta$, the ratio of output voltage V-Z$\beta$ to the input (input-output voltage ratio) is 0.85.

As shown in FIG. 15, a period in which the signs of the output voltage V-INV and the output current i-INV are opposite to each other is long, that is, a period in which reactive power is outputted is long. In such a reactive power output period, even if the manipulated variable Z is increased from the point P1 to the point P2 so that an OFF period of a voltage pulse, i.e., a period in which the voltage is zero, is adjusted to be shortened, the output voltage Vout of the LLC converter 10 hardly changes.

Thus, in such an operation condition that the power factor is low in the inverter circuit 1, even if the manipulated variable Z is changed in response to occurrence of the deviation err, the output voltage Vout hardly changes and control performance is deteriorated.

In Embodiment 2, the region A which is an operation range where control performance is deteriorated as described above can be detected and removed. Thus, an effect of improving control performance and improving response is obtained.

The operation range where control performance is deteriorated changes depending on the state of the connected load 12. Further, the operation range where control performance is deteriorated might also change depending on the resonance characteristic of the resonance circuit composed of the resonance capacitor 2, the series resonance reactor 3, and the parallel resonance reactor 4, variations in elements of the resonance circuit, or the like.

Therefore, as described above, such a method of changing the function F(Z) by detecting and removing the region A in accordance with the operation state of the LLC converter 10 can effectively achieve improvement in control performance and response.

Embodiment 3

In Embodiment 3, a range of the manipulated variable Z to be removed as a region where the differential value dV/dt of the output voltage Vout is not greater than the set value Dth is an end range on the greater manipulated variable Z side in the entire range (0 to 480).

First, as in the above Embodiment 1, the LLC converter 10 is operated using the function F(Z) shown in FIG. 7, and thereafter, the function F(Z) is changed in accordance with the operation state of the LLC converter 10.

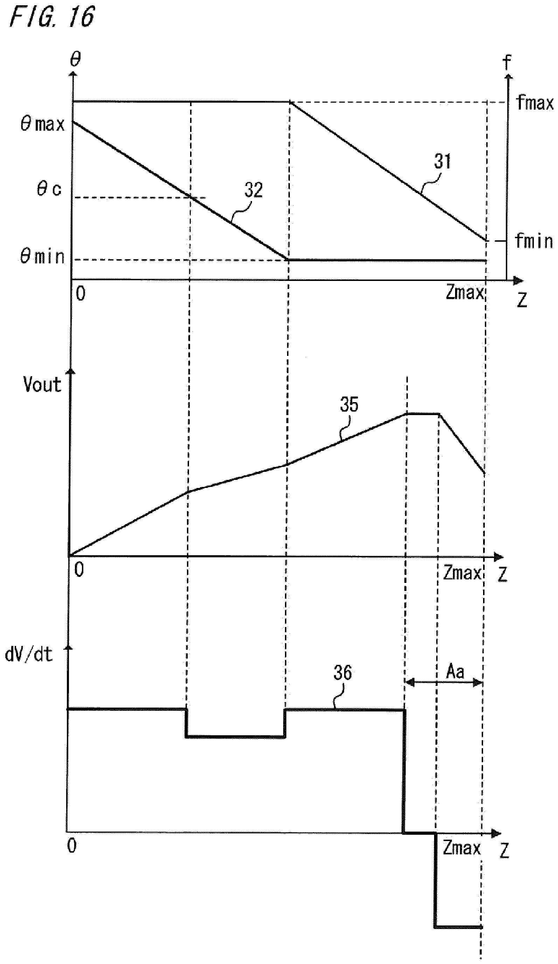

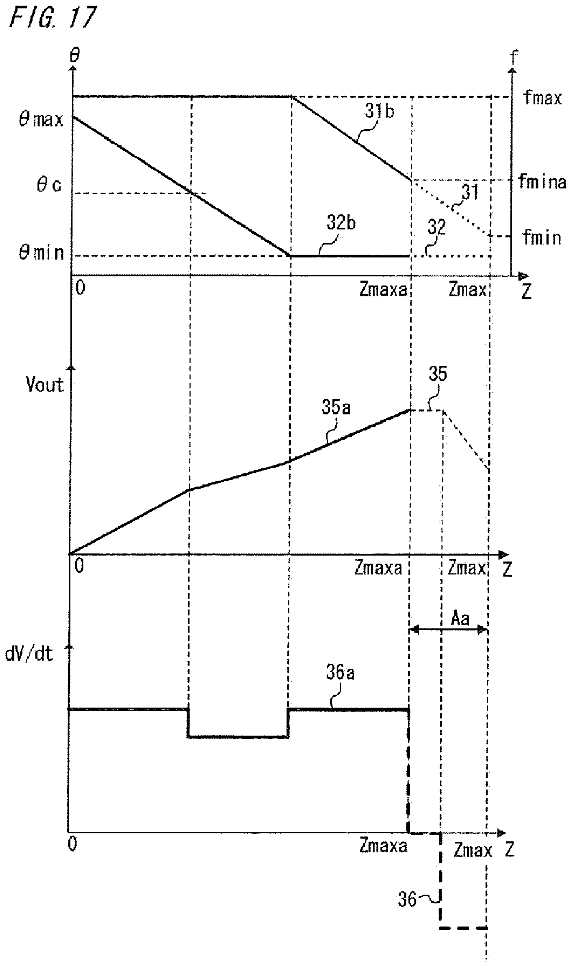

FIG. 16 and FIG. 17 show waveforms at respective parts for illustrating control according to Embodiment 3. Specifically, FIG. 16 shows waveforms at respective parts in a case of using the function F(Z) that has not been changed yet, and FIG. 17 shows waveforms at respective parts in a case of using the changed function F(Z).

As in the above Embodiment 2, to start supplying the gate signals 21 to the inverter circuit 1, the controller 20 generates the gate signals 21 in such a mode of sequentially increasing the manipulated variable Z, using the function F(Z) shown in the above Embodiment 1, thereby operating the LLC converter 10. At this time, the differential value dV/dt of the output voltage Vout is stored.

When the manipulated variable Z is sequentially increased using the function F(Z) as described above, in this case, the LLC converter 10 operates as shown in FIG. 16.

In FIG. 16, a waveform 31 represents change of the frequency f, and a waveform 32 represents change of the phase shift amount θ. A waveform 35 represents change of the output voltage Vout, and a waveform 36 represents change of the differential value dV/dt of the output voltage Vout.

Since the manipulated variable Z is an integer which is a discrete value, the waveforms 31 to 34 of the frequency f, the phase shift amount θ, the output voltage Vout, and the differential value dV/dt thereof do not actually exhibit continuous changes, but are shown as lines connecting values, for convenience sake. In this case, the maximum value Zmax of the manipulated variable Z is 480.

As shown in FIG. 16, when the manipulated variable Z increases to be close to the maximum value Zmax (= 480), the differential value dV/dt of the output voltage Vout might be reduced or become negative. That is, even if the manipulated variable Z is increased, the output voltage Vout does not increase and is reduced thereafter.

In this case, the set value is set at 0, a region Aa where the differential value dV/dt is not greater than the set value 0 is detected, and the function F(Z) is changed so as to exclude the region Aa.

By changing the function F(Z), as shown in FIG. 17, the frequency f, the phase shift amount θ, the output voltage Vout, and the differential value dV/dt thereof shift from characteristics represented by the waveforms 31, 32, 35, 36 to characteristics represented by waveforms 31b, 32b, 35a, 36a.

At this time, as shown in FIG. 16 and FIG. 17, the waveforms 31b, 32b, 35a, 36a are formed with the detected region Aa merely removed from the waveforms 31, 32, 35, 36, the maximum value Zmax of the manipulated variable Z decreases by the number of the removed manipulated variables Z, to become the maximum value Zmaxa, and the lower limit value fmin of the frequency f is changed to a lower limit value fmina.

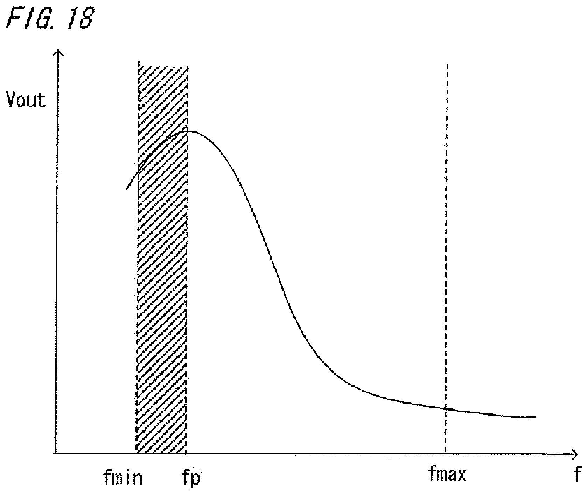

FIG. 18 is a waveform graph illustrating the relationship between the frequency and the output voltage.

As shown in FIG. 18, in the present embodiment, the lower limit value fmin for the frequency f is set to be smaller than the frequency fp at which the output voltage Vout is maximized. Then, by changing the function F(Z), a hatched range from the lower limit value fmin to the frequency fp is removed from the control range.

As described above, also in Embodiment 3, the region Aa where the differential value dV/dt of the output voltage Vout is not greater than a predetermined value 0 is detected, the function F(Z) is changed so as to exclude that region, and the changed function is used. In this way, such a range where the output voltage Vout decreases relative to increase of the manipulated variable Z, i.e., a range where the proportional relationship between the manipulated variable Z and the output voltage Vout cannot be kept, can be removed from the control range.

Here, the proportional relationship means that, under a condition that the impedance of the output voltage Vout is constant, the output voltage Vout increases with increase of the manipulated variable Z, and the output voltage Vout decreases with decrease of the manipulated variable Z. It becomes possible to perform more appropriate control by keeping the above proportional relationship.

Hereinafter, unique effects obtained by the circuit configuration according to Embodiment 3 will be described.

In general, in the LLC converter 10, the lower limit value fmin and the upper limit value fmax for the frequency f are set, and the frequency f is set so that the output is maximized at the lower limit value fmin and the output is minimized at the upper limit value fmax. As shown in FIG. 5 in the above Embodiment 1, the circuit constants are set such that the increase/decrease relationship between the frequency f and the output voltage Vout is not inverted, and control operation is performed in such a range.

However, there is a peak of the output voltage Vout in a lower frequency range, and there is a range where the output voltage Vout decreases with decrease of the frequency f. That is, the increase/decrease relationship between the frequency f and the output voltage Vout is inverted at the output voltage peak.

As described above, normally, the circuit constants or control is designed so that the LLC converter 10 is not operated in the range where the increase/decrease relationship between the frequency f and the output voltage Vout is inverted. However, as a result of such designing, the lower limit value fmin for the frequency f is set to be high, so that the adaptable load range, output, or error tolerance for the circuit constants is reduced.

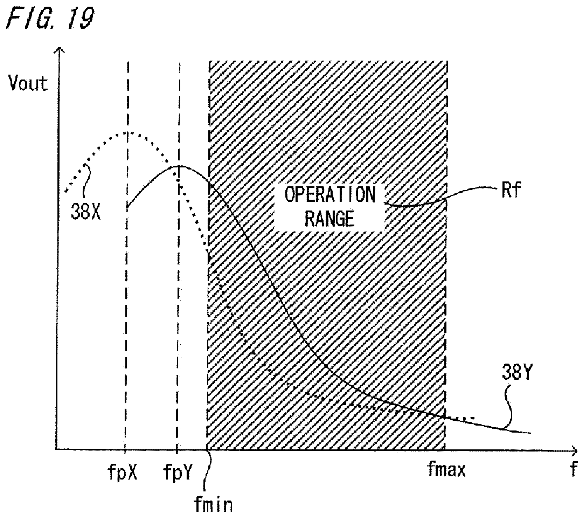

FIG. 19 illustrates an operation range and the relationship between the frequency and the output voltage under two load conditions.

As shown in FIG. 19, for output voltage 38X under a first load condition, a frequency fpX corresponding to a peak is, for example, 70 kHz, and for output voltage 38Y under a second load condition, a frequency fpY corresponding to a peak is, for example, 75 kHz.

In this case, in control of the power conversion device 100, if the lower limit value fmin for the frequency f is set at, for example, 76 kHz, the output voltage 38X under the first load condition is low in a set operation range Rf, so that desired output voltage 38X cannot be obtained.

The frequencies fpX, fpY corresponding to peaks are determined by parameters of elements of the resonance circuit composed of the resonance capacitor 2, the series resonance reactor 3, and the parallel resonance reactor 4, and therefore are also influenced by error or variation in constants thereof. Normally, the lower limit value fmin for the frequency f is set with tolerable error or load variation taken into consideration, but as a result, the lower limit value fmin for the frequency f is set to be high, so that the control range is reduced and robustness is also reduced.

In the present embodiment, the region Aa where the differential value dV/dt of the output voltage Vout is not greater than a predetermined value 0 is detected and the function F(Z) is changed so as to exclude that region, whereby the maximum value Zmax of the manipulated variable Z and the lower limit value fmin for the frequency f can be changed.

Thus, it is possible to adapt to a wide load range, the designing range for the frequency f is expanded, and robustness is improved.

Although the invention is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the invention.

It is therefore understood that numerous modifications which have not been exemplified can be devised without departing from the scope of the present invention. For example, at least one of the constituent components may be modified, added, or eliminated. At least one of the constituent components mentioned in at least one of the preferred embodiments may be selected and combined with the constituent components mentioned in another preferred embodiment.

DESCRIPTION OF THE REFERENCE CHARACTERS

1 inverter circuit
2 resonance capacitor
3 series resonance reactor
5 isolation transformer
5a primary-side coil
5b secondary-side coil
6 output circuit
10, 10a, 10b LLC converter
20 controller
100 power conversion device
A region
Dth set value
f frequency
F, Fa, Fb function
Vout output voltage
Vref target voltage

X first specific region
Y second specific region
Z manipulated variable
θ phase shift amount

**Claims**

1. A power conversion device comprising:

   an LLC-type DC/DC converter including an isolation transformer, an inverter circuit connected to a primary-side coil of the isolation transformer, a resonance reactor and a resonance capacitor provided between the inverter circuit and the primary-side coil and connected in series to the primary-side coil, and an output circuit which is connected to a secondary-side coil of the isolation transformer and rectifies output voltage; and
   a controller which performs drive control of the inverter circuit, to perform output control of the DC/DC converter, wherein
   the controller performs control calculation for a value Za of a manipulated variable Z so that the output voltage comes close to target voltage, and acquires a combination of a phase shift amount θ and a frequency f corresponding to the value Za of the manipulated variable Z, to perform drive control of the inverter circuit.

2. The power conversion device according to claim 1, wherein
   the controller includes a function for uniquely associating each value of the manipulated variable Z with the combination of the phase shift amount θ and the frequency f, and acquires the combination of the phase shift amount θ and the frequency f corresponding to the calculated value Za of the manipulated variable Z, on the basis of the function.

3. The power conversion device according to claim 2, wherein

   an entire range of the manipulated variable Z is constituted of consecutive integers from 0 to a maximum value, and the entire range is divided into a low manipulated variable range and a high manipulated variable range subsequent thereto, and
   the function is set such that, in the low manipulated variable range of the manipulated variable Z, the frequency f is kept at an upper limit value fmax and the phase shift amount θ decreases by a set change width Δθ from an upper limit value θmax to a lower limit value θmin per increase of the manipulated variable Z by 1, and in the high manipulated variable range of the manipulated variable Z, the phase shift amount θ is kept at the lower limit value θmin and the frequency f decreases by a set change width Δf from the upper limit value fmax to a lower limit value fmin per increase of the manipulated variable Z by 1.

4. The power conversion device according to claim 3, wherein
   the combination of the phase shift amount θ and the frequency f corresponding to a border point between two ranges that are the low manipulated variable range and the high manipulated variable range, is the lower limit value θmin of the phase shift amount θ and the upper limit value fmax of the frequency f.

5. The power conversion device according to claim 3 or 4, wherein
   the function is set such that, in an entirety of the low manipulated variable range, the phase shift amount θ continuously decreases by the equal set change width Δθ per increase of the manipulated variable Z by 1, and in an entirety of the high manipulated variable range, the frequency f continuously decreases by the equal set change width Δf per increase of the manipulated variable Z by 1.

6. The power conversion device according to claim 3 or 4, wherein

   as the set change width Δθ for the phase shift amount θ, there are a unit change width Δθ1 and a change width Δθ2 that is plural times of the unit change width Δθ1, and
   wherein in the low manipulated variable range, a first specific region corresponding to a change amount 1 of the manipulated variable Z is provided, and the phase shift amount θ continuously decreases by the unit change width Δθ1 per increase of the manipulated variable Z by 1 except in the first specific region, and decreases by the change width Δθ2 in the first specific region.

7. The power conversion device according to any one of claims 3, 4, and 6, wherein

as the set change width Δf for the frequency f, there are a unit change width Δf1 and a change width Δf2 that is plural times of the unit change width Δf1, and

wherein in the high manipulated variable range, a second specific region corresponding to a change amount 1 of the manipulated variable Z is provided, and the frequency f continuously decreases by the unit change width Δf1 per increase of the manipulated variable Z by 1 except in the second specific region, and decreases by the change width Δf2 in the second specific region.

8. The power conversion device according to any one of claims 3 to 7, wherein
the function is determined such that an output differential value of the DC/DC converter with respect to change of the manipulated variable Z exceeds a set value.

9. The power conversion device according to claim 8, wherein
the controller detects a region where the output differential value of the DC/DC converter with respect to change of the manipulated variable Z is not greater than the set value, and changes and determines the function such that the maximum value of the manipulated variable Z is decreased by a number of the manipulated variables Z corresponding to the detected region and the combinations of the phase shift amount θ and the frequency f corresponding to the detected region are excluded.

10. The power conversion device according to claim 9, wherein
the function is changed such that the combinations of the phase shift amount θ and the frequency f subsequent toward a direction in which the manipulated variable Z becomes greater than the detected region are shifted to the detected region side.

FIG. 1

FIG. 2

FIG. 3

FIG. 4

## FIG. 5

*FIG. 6*

*FIG. 7*

FUNCTION: F (Z) = (θ, f)

| MANIPULATED VARIABLE Z | 0 | 1 | 2 | ... | 180 | 181 | 182 | ... | 478 | 479 | 480 |
|---|---|---|---|---|---|---|---|---|---|---|---|
| PHASE SHIFT AMOUNT θ [°] | 180 ←→179 | 178 | ... | 0 | 0 | 0 | ... | 0 | 0 | 0 | |
| FREQUENCY f [kHz] | 100 | 100 | 100 | ... | 100 ←→99.9 | 99.8 | ... | 70.2 | 70.1 | 70 | |

Δθ

Δf

EP 4 366 149 A1

## FIG. 8

FUNCTION: $F(Z) = (\theta, f)$

| MANIPULATED VARIABLE Z | ... | 169 | 170 | 171 | ... | 199 | 200 | 201 |
|---|---|---|---|---|---|---|---|---|
| PHASE SHIFT AMOUNT $\theta$ [°] | ... | 11 | 10 | 9 | ... | 0 | 0 | 0 |
| FREQUENCY f [kHz] | ... | 100 | 100 | 100 | ... | 98.1 | 98 | 97.9 |

EP 4 366 149 A1

FIG. 9

200

201

PROCESSOR

202

STORAGE DEVICE

## *FIG. 10*

*FIG. 11*

## FIG. 12

FUNCTION: F(Z) = (θ, f)

Δθ1

| MANIPULATED VARIABLE Z | ⋯ | 169 | 170 | 171 | ⋯ | 179 | 180 | 181 | ⋯ | 480 |
|---|---|---|---|---|---|---|---|---|---|---|
| PHASE SHIFT AMOUNT θ [°] | ⋯ | 11 ⟷ 10 | 9 | ⋯ | 1 | 0 | 0 | ⋯ | 0 |
| FREQUENCY f [kHz] | ⋯ | 100 | 100 | 100 | ⋯ | 100 | 100 | 99.9 | ⋯ | 70 |

B     AA     C

FUNCTION: Fa(Z) = (θ, f)    X

| MANIPULATED VARIABLE Z | ⋯ | 169 | 170 | 171 | 172 | 173 | ⋯ | 470 |
|---|---|---|---|---|---|---|---|---|
| PHASE SHIFT AMOUNT θ [°] | ⋯ | 11 ⟷ 0 | 0 | 0 | 0 | ⋯ | 0 |
| FREQUENCY f [kHz] | ⋯ | 100 | 100 | 99.9 | 99.8 | 99.7 | ⋯ | 70 |

B    Δθ2    Ca

EP 4 366 149 A1

## FIG. 13

FUNCTION: F(Z) = (θ, f)

| MANIPULATED VARIABLE Z | ... | 369 | 370 | 371 | ... | 379 | 380 | 381 | ... | 480 |
|---|---|---|---|---|---|---|---|---|---|---|
| PHASE SHIFT AMOUNT θ [°] | ... | 0 | 0 | 0 | ... | 0 | 0 | 0 | ... | 0 |
| FREQUENCY f [kHz] | ... | 81.1↔81 | 80.9 | ... | 80.1 | 80 | 79.9 | ... | 70 |

B     AA     C

Δf1

FUNCTION: Fb(Z) = (θ, f)

Y

| MANIPULATED VARIABLE Z | ... | 369 | 370 | 371 | 372 | 373 | ... | 470 |
|---|---|---|---|---|---|---|---|---|
| PHASE SHIFT AMOUNT θ [°] | ... | 11 | 0 | 0 | 0 | 0 | ... | 0 |
| FREQUENCY f [kHz] | ... | 81.1↔80 | 79.9 | 79.8 | 79.7 | ... | 70 |

B     Ca

Δf2

EP 4 366 149 A1

FIG. 14

FIG. 15

Vout

A

P1    P2

V-Zβ

V-Zα

Zα    Zβ    Zmax

V-INV

V-INV

i-INV

i-INV

EP 4 366 149 A1

## FIG. 16

## FIG. 17

FIG. 18

## FIG. 19

**INTERNATIONAL SEARCH REPORT**

International application No.

PCT/JP2021/024692

| A. CLASSIFICATION OF SUBJECT MATTER |
|---|
| H02M 3/28(2006.01)i |
| FI: H02M3/28 Q |
| |
| According to International Patent Classification (IPC) or to both national classification and IPC |

| B. FIELDS SEARCHED |
|---|
| Minimum documentation searched (classification system followed by classification symbols) |
| H02M3/28 |

| Documentation searched other than minimum documentation to the extent that such documents are included in the fields searched | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| A | JP 2021-35328 A (TAIDA ELECTRONIC IND CO LTD) 01 March 2021 (2021-03-01) entire text, all drawings | 1-10 |
| A | JP 2016-63745 A (CONTINENTAL AUTOMOTIVE SYSTEMS, INC.) 25 April 2016 (2016-04-25) entire text, all drawings | 1-10 |
| A | JP 2002-262569 A (GENERAL ELECTRIC CO <GE>) 13 September 2002 (2002-09-13) entire text, all drawings | 1-10 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 August 2021 (12.08.2021) | 24 August 2021 (24.08.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

33

**EP 4 366 149 A1**

| INTERNATIONAL SEARCH REPORT | | International application No. | |
|---|---|---|---|
| Information on patent family members | | PCT/JP2021/024692 | |
| Patent Documents referred in the Report | Publication Date | Patent Family | Publication Date |
| JP 2021-35328 A | 01 Mar. 2021 | (Family: none) | |
| JP 2016-63745 A | 25 Apr. 2016 | US 2016/0079862 A1 entire text, all drawings CN 105429473 A | |
| JP 2002-262569 A | 13 Sep. 2002 | US 4951185 A entire text, all drawings EP 408253 A2 | |

Form PCT/ISA/210 (patent family annex) (January 2015)

**EP 4 366 149 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016063745 A